# EUROPÄISCHE PATENTSCHRIFT

(11) **EP 2 619 045 B1**
(45) Veröffentlichungstag und Bekanntmachung des Hinweises auf die Patenterteilung: **28.10.2015**
(21) Anmeldenummer: 11808156.1
(22) Anmeldetag: 15.09.2011
(51) Int. Cl.: B60S 9/12

(54) **VERFAHREN ZUM EIN- UND AUSFAHREN EINER STÜTZBEINVORRICHTUNG SOWIE STÜTZBEINVORRICHTUNG**
METHOD FOR RETRACTING AND DEPLOYING A LANDING GEAR DEVICE, AND LANDING GEAR DEVICE
PROCÉDÉ POUR ESCAMOTER ET DÉPLOYER UN DISPOSITIF À PIEDS D'APPUI, ET DISPOSITIF À PIEDS D'APPUI

(30) Priorität: 22.09.2010 DE 102010037707
(43) Veröffentlichungstag der Anmeldung: 31.07.2013
(73) Patentinhaber: Neuland Beton H. Burgis KG (GmbH & Co.), 21079 Hamburg (DE)
(72) Erfinder: METTERNICH, Heinz-Rüdiger, 21279 Eversen-Heide (DE); LÜDERS, Karsten, 21217 Seevetal (DE)
(74) Vertreter: Hansen, Jochen
(86) Internationale Anmeldenummer: PCT/DE2011/075221
(87) Internationale Veröffentlichungsnummer: WO 2012/048699

(56) Entgegenhaltungen:
- EP-A2- 2 014 525
- EP-B1- 1 506 124
- AT-B- 301 364
- US-A1- 2005 067 227
- US-A1- 2005 140 100
- US-A1- 2006 108 748

## Beschreibung

Die Erfindung betrifft ein Verfahren zum Ein- und Ausfahren einer Stützbeinvorrichtung für Sattelauflieger mit einem Druckluft aufweisenden Nebenverbrauchersystem und wenigstens einem mittels Hubzylinder teleskopierbaren Stützbein. Ferner betrifft die Erfindung eine derartige Stützbeinvorrichtung.

Stützbeinvorrichtungen, oder auch Sattelstützen genannt, dienen zur Abstützung von abgesattelten Sattelaufliegern oder werden auch bei Starrdeichselanhängern in abgekuppeltem Zustand verwendet, um die Stützlasten aufzunehmen und später ein Ankuppeln wieder zu ermöglichen. Derartige Stützbeinvorrichtungen weisen wenigstens ein, meist jedoch zwei teleskopierbare Stützbeine auf, die aus einer eingezogenen Stellung für den Fahrbetrieb in eine ausgefahrene Stellung zum Abstützen des Aufliegers verstellbar ausgebildet sind. Dabei kann das Stützbein beispielsweise manuell über einen Spindeltrieb ausgefahren werden. Um die hohe Last insbesondere eines beladenen Sattelaufliegers anheben zu können, weisen derartige Stützbeinvorrichtungen teilweise Zweigangkurbeln auf, die zunächst ein relativ schnelles Ausfahren der Stützbeine bis zum Boden erlauben und anschließend ein geringes Anheben unter Last über eine starke Untersetzung manuell ermöglichen.

Nachteilig an den bekannten manuellen Vorrichtungen ist, dass die Bedienung zeit- und kraftaufwendig ist und die Bedienperson im Gefahrenbereich am Auflieger tätig ist.

Aus der EP 1 506 124 B1 ist ein Stützbein mit einem Druckluftantrieb für das Ein- und Ausfahren der teleskopierbaren Rohre bekannt. Um größere Stützlasten aufnehmen zu können und eine weitere Komprimierung der im Druckluftzylinder vorliegenden Druckluft zu vermeiden, ist eine gesonderte Arretierung beim Ausfahren und ein Lösen der Arretierung beim Einfahren erforderlich.

Ferner ist aus der AT 301 364 ein druckluftgesteuertes hydraulisches System zur Betätigung von Stützböcken von Sattelschleppern bekannt, bei dem Druckluft aus dem Luftdruckbremssystem in einen Hydrauliktank geleitet wird, um die darin befindliche Hydraulikflüssigkeit in einen hydraulischen Innenzylinder in einer teleskopierbaren Sattelstütze einzuleiten. Die Sattelstütze fährt dann bis zum Boden aus. Für das Anheben des Sattelaufliegers ist dann ein einfach wirkender Druckübersetzer vorgesehen, der den begrenzten Druckluft des Luftdruckbremssystems unter einen erhöhten hydraulischen Druck setzt und diesen ebenfalls zum unteren Zylinder in den Stützbeinen leitet. Entsprechend kann der Sattelauflieger gegen seine Auflast angehoben werden. Zum Einfahren wird Druckluft in einen Luftdruckzylinder im Stützbein eingeleitet, um das Stützbein einzufahren und dabei die im unteren Zylinder befindliche Hydraulikflüssigkeit wieder zurück in den Hydrauliktank zu leiten.

Nachteilig an dieser Vorrichtung ist der sehr komplizierte Aufbau des Stützbeins mit zwei ineinander integrierten Druckzylindern, einmal für die hydraulische Ansteuerung und einmal für die pneumatische. Ferner werden bei diesem System beide parallel nebeneinanderstehenden Stützbeine gleichzeitig über ein Verteilerventil befüllt, so dass auch beim Betrieb mit Druckübersetzer eine Ausgleichsströmung von Hydraulikflüssigkeit von einem zum anderen Stützbein fließen kann, womit ein ungleicher Lasteintrag bis hin zum Umkippen des Sattelaufliegers möglich ist. Dies kann in der bekannten Vorrichtung nur durch manuelles Eingreifen verhindert werden.

Die US 2006/0108748 A1 beschreibt eine von der Fahrzeugpreumatik antreibbare Stützbeinvorrichtung mit hydraulischen Druckstempeln. Dabei wird für das Ausfahren des Stützbeins die Hydraulikflüssigkeit in einem Vorratstank durch darin eingeleitete Druckluft druckbeaufschlagt, womit der hydraulische Druckstempel ausgefahren wird. Zum Einfahren des Stützbeins wird die Hydraulikleitung geöffnet und der hydraulische Hubzylinder auf seiner anderen Seite mit der Druckluft belastet, womit die Hydraulikflüssigkeit in den Vorratstank zurückfl ießt.

Ausgehend von diesem Stand der Technik ist es Aufgabe der Erfindung, eine Stützbeinvorrichtung bzw. ein Verfahren zum Ein- und Ausfahren einer Stützbeinvorrichtung anzugeben, bei dem bzw. bei der zum Anheben des Sattelaufliegers eine hohe Kraft realisiert werden kann.

Gelöst wird diese Aufgabe mit einem Verfahren gemäß Anspruch 1 und einer Stützbeinvorrichtung gemäß Anspruch 4.

Durch das Beaufschlagen des Hubzylinders mit Hydraulikflüssigkeit von einem Vorratstank über eine Hydraulikleitung auf der einen Seite des Hubzylinders zum Ausfahren des Stützbeins, wobei die Hydraulikflüssigkeit mittels der Druckluft des Nebenverbrauchersystems Druck beaufschlagt wird, in dem Druckluft des Nebenverbrauchersystems in den Vorratstank geleitet wird, wird die im am Sattelauflieger üblicherweise vorliegenden Nebenverbrauchersystem anliegende Druckluft von beispielsweise 8 bar für die Druckbeaufschlagung der Hydraulikflüssigkeit in einfacher Weise verwendet. Durch das Absperren der Hydraulikleitung bei Erreichen der ausgefahrenen Stützstellung, wird ein praktisch nicht komprimierbares Medium, nämlich Hydraulikflüssigkeit, in den Hubzylinder eingebracht, so dass nach dem Absperren der Hydraulikleitung eine dauerhaft starre und hohe Stützlasten aufnehmende Stützbeinvorrichtung angegeben ist. Eine mechanische Arretierung in der ausgefahrenen Stellung ist nicht erforderlich.

Nach dem erneuten Kuppeln des Sattelaufliegers an einer Zugmaschine wird dann das Stützbein durch Öffnen der Hydraulikleitung und durch Beaufschlagen des Hubzylinders mit der Druckluft auf der anderen Seite des Hubzylinders eingefahren, wobei die Hydraulikflüssigkeit in den Vorratstank zurückfließt.

Dabei ist der im Stützbein angeordnete Hubzylinder mit nur einem Kolben ausgestattet, der an seiner oberen Kolbenseite ausschließlich mit der Hydraulikflüssigkeit zum Ausfahren des Stützbeines und auf seiner Unterseite ausschließlich mit Druckluft zum Wiedereinfahren des Stützbeins beaufschlagt wird. Es wird also dieser eine Hubzylinder auf der einen Seite hydraulisch und auf der anderen Seite pneumatisch betätigt. Dies vereinfacht die Zylinderkonstruktion erheblich.

Dadurch, dass das Öffnen der Hydraulikleitung bei Beaufschlagen des Hubzylinders auf der anderen Seite mit der Druckluft über ein pneumatisch aktivierbares Hydraulikventil erfolgt, wird die Umstellung zum Einfahren des Stützbeins automatisch bei Druckluftbeaufschlagung des Systems in der Stellung "Stützbeine anheben" allein durch Umstellen eines pneumatischen Ventils erreicht. Dies kann beispielsweise in einem gesicherten Bereich am Sattelauflieger oder gar fernbetätigt vom Führerstand des Zugfahrzeugs erfolgen.

In weiterer vorrichtungsgemäßer Ausgestaltung sind in der Hydraulikzuleitung ein Rückschlagventil zum Sperren eines Rückflusses der Hydraulikflüssigkeit in den Vorratstank angeordnet und stromabwärtig vom Rückschlagventil eine zum Vorratstank zurückführende Hydraulikrückleitung mit einem 2/2-Wege-Ventil zum bedarfsweisen Einfahren des Stützbeins angeschlossen.

Das in der Hydraulikzuleitung vorgesehene Rückschlagventil verhindert ein unbeabsichtigtes Absenken des Sattelaufliegers bzw. Einfahren der Stützbeine. Die im Hubzylinder in der ausgefahrenen Stellung eingebrachte Hydraulikflüssigkeitsmenge wird dann über ein bedarfsweise zu betätigendes 2/2-Wege-Ventil zum Einfahren des Stützbeins betätigt. Die dabei in den unteren Teil des Hubzylinders einströmende Druckluft unterstützt das Zurückfließen der Hydraulikflüssigkeit durch die Hydraulikrückleitung in den Vorratstank und hebt den teleskopierbaren Teil des Stützbeins an bis die eingefahrene Stellung (Fahrtzustand) erreicht ist.

Insbesondere für Sattelauflieger und derartige Transportfahrzeuge sind zwei Stützbeine vorgesehen, wobei jedem Stützbein ein Rückschlagventil und ein 2/2-Wege-Ventil zugeordnet sind. Durch gesonderte Zuleitungen mit je einem Rückschlagventil für die beiden Stützbeine wird verhindert, dass ein Stützbein einsinken kann während das andere über einen Hydraulikausgleich entsprechend ausfährt (Umkippsicherung).

Dadurch, dass ein Druckübersetzer mit Druckluftniederdruckkolben und Hydraulikhochdruckkolben vorgesehen ist, dessen Hydraulikhochdruckkolben an die Hydraulikzuleitung angeschlossen ist, wobei von diesem Anschluss stromaufwärtig und stromabwärtig je ein Rückschlagventil zum Sperren eines Rückflusses der Hydraulikflüssigkeit in den Vorratstank angeordnet sind, kann eine entsprechend dem Druckübersetzer höhere Kraft auf das teleskopierbare Stützbein ausgeübt werden. Dabei wird zum weiteren Anheben des Sattelaufliegers mit der Stützbeinvorrichtung die Hydraulikflüssigkeit von der Druckluft in einem pneumatisch/hydraulischen Druckübersetzer unter erhöhten Druck gesetzt.

Insbesondere sind der Druckübersetzer doppelseitig wirkend ausgebildet und ein Steuerventil zur wechselseitigen Druckluftbeaufschlagung des Druckluftniederdruckkolbens vorgesehen. Damit kann mit jedem Hub des Druckübersetzers eine entsprechend des Übersetzungsverhältnisses kleinere Menge jedoch unter erhöhtem Druck dem Hubzylinder zugeführt werden.

In weiterer Ausgestaltung hat der Druckübersetzer zwei Hydraulikhochdruckkolben, wobei der erste Hochdruckkolben an den Hubzylinder des ersten Stützbeins und der zweite Hochdruckkolben an den Hubzylinder des zweiten Stützbeins angeschlossen ist. Somit wird immer wechselseitig das eine Stützbein und danach beim nächsten Hub das andere Stützbein um einen dem im Druckübersetzer im Hydraulikhochdruckkolben verdrängten Volumen entsprechenden kurzen Hub angehoben. Unter einem vermehrten Druckluftverbrauch wird somit der abzustützende Sattelauflieger gegen seine gesamte Auflast angehoben. Dabei bewirkt die getrennte Hydraulikzuleitung von dem einen Hydraulikhochdruckkolben zum ersten Stützbein und die andere getrennte Zuleitung von dem anderen Hydraulikhochdruckkolben zum anderen Stützbein so, dass stets zu beiden Stützbeinen abwechselnd ein gleiches Hydraulikflüssigkeitsvolumen eingepresst wird, womit sich die beiden Stützbeine unabhängig vom jeweils individuellen Auflastdruck gleichmäßig anheben. Im Zusammenhang mit den Rückschlagventilen in der Zuleitung wird eine hydraulische Ausgleichsströmung zwischen dem einen Hubzylinder des ersten Stützbeins zum Hubzylinder des zweiten Stützbeins verhindert und somit eine Umkippsicherung realisiert.

Nach dem Ausfahren der beiden Stützbeine bis auf den Boden, bei dem sich die Hydraulikflüssigkeit selbsttätig auf die beiden Hubzylinder der beiden Stützbeine verteilt und somit einen etwaigen Höhenausgleich zwischen dem Auflastpunkt des einen Stützbeins zum Auflastpunkt des anderen Stützbeins bewirkt, werden im nachfolgenden Anhebeverfahren über den doppelseitig wirkenden Druckübersetzer das rechte und das linke Stützbein durch die hydraulische Verschaltung "quasi wie mechanisch gekoppelt" angehoben.

Nachfolgend wird ein Ausführungsbeispiel der Erfindung anhand der beiliegenden Zeichnungen detailliert beschrieben. Darin zeigt:
- Fig. 1: in einer räumlichen Ansicht eine Stützbeinvorrichtung in eingefahrenem Zustand,
- Fig. 2: die in Fig. 1 dargestellte Stützbeinvorrichtung in einer Seitenansicht in ausgefahrenem Zustand und
- Fig. 3: ein Schaltschema für die Steuerung und Verschaltung der Stützbeinvorrichtung gemäß der Figuren 1 und 2.

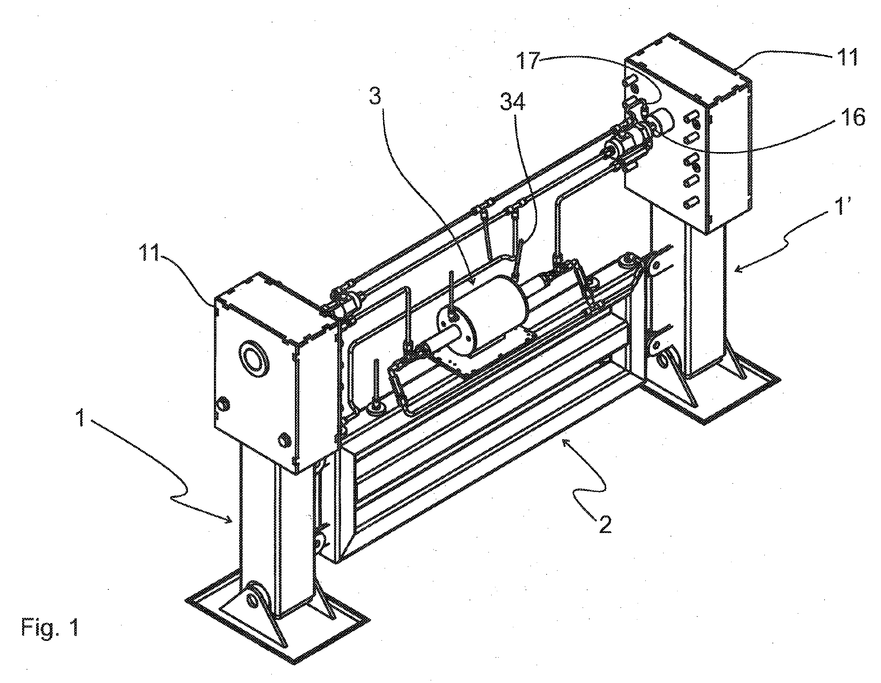

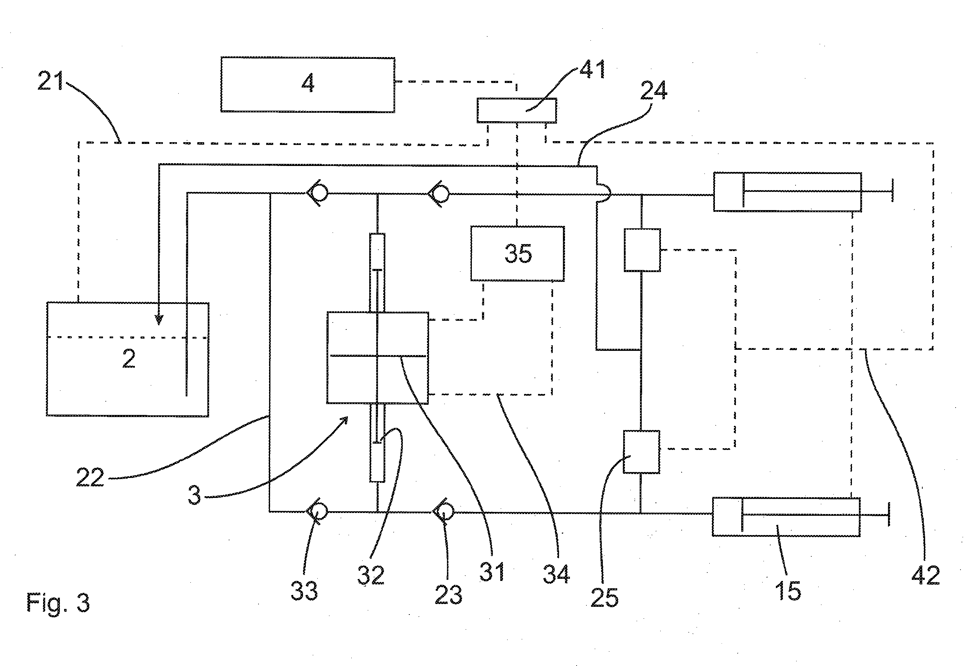

In Fig. 1 ist in räumlicher Ansicht eine Stützbeinvorrichtung für einen Sattelauflieger mit zwei teleskopierbaren Stützbeinen 1, 1' dargestellt. Jedes Stützbein weist einen Montagekopf 11 auf, der am nicht dargestellten Sattelauflieger an dafür vorgesehenen Befestigungspunkten im Bereich der Längstraversen befestigt wird. Ferner hat der Auflieger ein Nebenverbrauchersystem 4 für Druckluft (siehe Fig. 3), das in Fig. 1 ebenfalls nicht dargestellt ist.

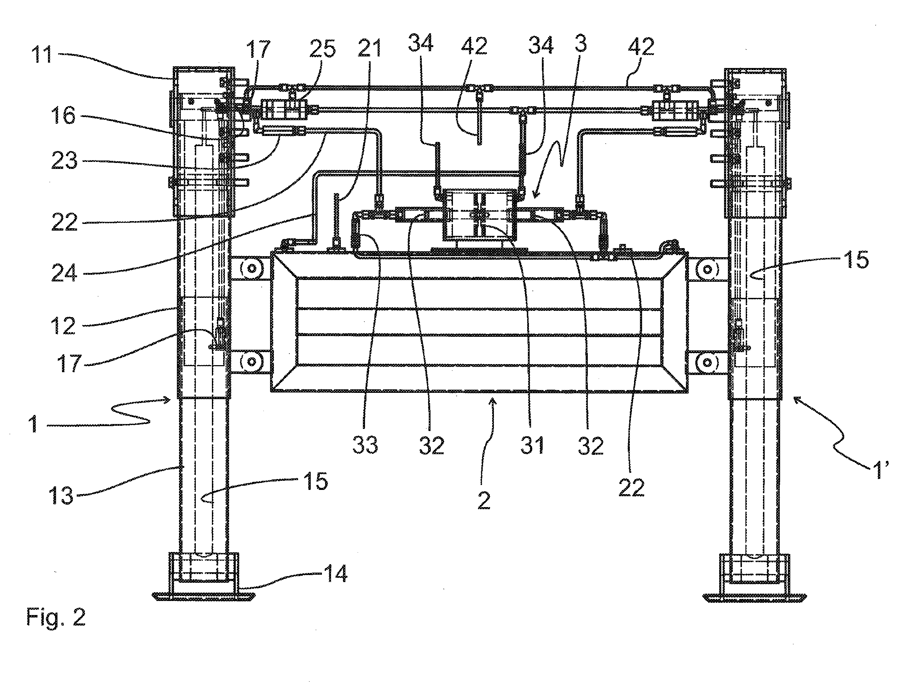

Im dargestellten Ausführungsbeispiel weist das Stützbein 1, 1' ein fixiertes äußeres Rohr 12 und ein darin teleskopierbar geführtes inneres Rohr 13 auf (siehe Fig. 2). Nachfolgend wird die Ausgestaltung jeweils nur für ein Stützbein 1 erläutert, da sie für das zweite Stützbein 1' identisch ist.

Das Stützbein 1 weist am unteren Ende des inneren Rohres 13 einen Lastverteilungsfuß 14 auf. Im Inneren des Stützbeins 1 ist ein Hubzylinder 15 zwischen dem unteren Ende des inneren Rohres 13 und dem oberen Ende des äußeren Rohres 12 eingespannt. Der Hubzylinder 15 ist in Fig. 2 gestrichelt dargestellt.

Am oberen Ende des Stützbeins ist ein Hydraulikanschluss 16 vorgesehen, der mit der oberen Kammer des Hubzylinders 15 zum Ausfahren des Stützbeins 1 verbunden ist. Ferner ist ein Druckluftanschluss 17 vorgesehen, der mit dem unteren Hubraum des Hubzylinders 15 zum Einfahren des Stützbeins 1 in Verbindung steht.

Zwischen beiden Stützbeinen 1, 1' ist ein Vorratstank 2 für Hydraulikflüssigkeit angeordnet, der im dargestellten Ausführungsbeispiel aus drei miteinander verschweißten Vierkantrohren druckfest gebildet ist. Selbstverständlich kann der Vorratstank 2 jede geeignete druckfeste Form aufweisen. An dem Vorratstank 2 ist an seiner Oberseite eine Druckluftzuleitung 21 angeschlossen. Zur Unterscheidung von den Hydraulikleitungen sind alle Druckluftleitungen in Fig. 3 gestrichelt dargestellt.

Die Druckluftzuleitung 21 ist am Nebenverbrauchersystem 4 über ein 5/2-WegeVentil 41 angeschlossen. Ferner ist am Vorratstank 2 eine Hydraulikzuleitung 22 vorgesehen, die im dargstellten Ausführungsbeispiel gemäß Fig. 2 zwar am oberen Rand des Vorratstanks 2 angeordnet ist, jedoch ein bis fast zum Boden des Vorratstanks 2 herabreichendes Tauchrohr enthält. Die Hydraulikzuleitung 22 verzweigt sich in zwei Stränge, die zu den beiden Stützbeinen 1, 1' führen. Die Hydraulikzuleitung 22 ist dabei über ein Rückschlagventil 23 am Hubzylinder 15 im Stützbein 1 auf der oberen Zylinderseite zum Ausfahren des Stützbeins angeschlossen. Ferner führt von diesem Hydraulikanschluss am Hubzylinder 15 eine Hydraulikrückleitung 24 über ein 2/2-Wege-Ventil 25 zurück zum Vorratstank 2.

Ferner ist eine zweite Druckluftzuleitung 42 vorgesehen, die vom 5/2-WegeVentil 41 zum Stützbein 1 und mit Verzweigung auch zum Stützbein 1' führt. Die zweite Druckluftzuleitung 42 ist einerseits am 2/2-Wege-Ventil 25 zur Verstellung des Ventils in die Arbeitsstellung (Durchlassstellung für die Hydraulikrückleitung 24) angeschlossen und führt weiter in das Stützbein 1 zum Hubzylinder 15 zum gestrichelt angedeuteten unteren Anschluss 17 (Fig. 2), nämlich an die pneumatisch betätigte Seite des Hubzylinders 15 zum Anheben des inneren Rohres 13 des Stützbeines 1.

Dieser soweit beschriebene Aufbau entspricht im Wirkprinzip dem Anmeldungsgegenstand ohne Druckübersetzer.

In weiterer Ausgestaltung kann die Stützbeinvorrichtung zusätzlich einen Druckübersetzer 3 aufweisen, der einen Druckluftniederdruckkolben 31 und an beiden Seiten je einen Hydraulikhochdruckkolben 32 aufweist. Der Druckübersetzer 3 ist doppelwirkend ausgebildet, so dass an den Druckluftniederdruckzylinder 31 beidseitig des Kolbens zwei Druckluftanschlussleitungen 34 angeschlossen sind, die über einen Wechselschalter, beispielsweise einem 5/2-Wege-Ventil 35 bedarfsweise an das Nebenverbrauchersystem 4 angeschlossen sind. Am Hydraulikhochdruckkolben 32 ist die Hydraulikzuleitung 22 angeschlossen. Durch Vorsehen eines weiteren Rückschlagventils 33 stromaufwärtig vom Anschluss an den Hydraulikhochdruckkolben 32 wird ein unerwünschter Rückfluss des hochkomprimierten Hydrauliköls in den Vorratstank 2 vermieden.

Nachfolgend wird die Arbeitsweise der Stützbeinvorrichtung unter Bezugnahme auf das dargestellte Ausführungsbeispiel beschrieben.

Zunächst befindet sich die Stützbeinvorrichtung in der in Fig. 1 dargestellten eingefahrenen Grundstellung. In dieser Stellung ist die Stützbeinvorrichtung am Sattelauflieger so an den Längstraversen befestigt, dass ein für den Fahrbetrieb ausreichender Abstand zur Fahrbahn besteht. Soll nun der Sattelauflieger von der Zugmaschine getrennt und abgestellt werden, ist die Stützbeinvorrichtung zu aktivieren, also die beiden Stützbeine 1,1' auszufahren. Dazu wird ein Betätigungsventil, nämlich das 5/2-Wege-Ventil 41, das pneumatisch unmittelbar an das Nebenverbrauchersystem 4 des Sattelaufliegers angeschlossen ist, in die Stellung "Ausfahren der Stützbeine" gestellt. Damit wird über das Ventil 41 Druckluft über die erste Druckluftzuleitung 21 in den Vorratstank 2 geleitet. Die Druckluft des Nebenverbrauchersystems 4 hat üblicherweise einen Druck von 8 bar. Somit wird das im Vorratstank 2 befindliche Hydrauliköl entsprechend mit 8 bar Druck beaufschlagt. Das Hydrauliköl aus dem Vorratstank 2 steigt nun über die Tauchleitung in die Hydraulikzuleitung 22, einen Verteiler und in jedem Strang der Hydraulikzuleitung 22 über ein Rückschlagventil 23 zum jeweiligen Stützbein 1, 1', wo die Hydraulikleitung an den Hubzylinder 15 im oberen Zylinderbereich angeschlossen ist. Entsprechend fließt das Hydrauliköl mit 8 bar Druck in die Hubzylinder 15 der beiden Stützbeine 1, 1', so dass diese ausfahren. Bei Erreichen des Bodens wird bei einem Hubzylinder 15 von 50 cm² Querschnittsfläche und 8 bar Druck eine Auflastkraft von ca. 400 kg je Stützbein erzeugt. Damit wird das Zugfahrzeug zwar geringfügig entlastet, der Sattelauflieger jedoch nicht angehoben.

Bei einer Ausführung ohne Druckübersetzer 3, wird dieser Vorgang bevorzugt ausgeführt, wenn die Zugmaschine mit Luftfederung vorher ausreichend angehoben wurde. Nun kann zum Abkuppeln die Zugmaschine ein kurzes Stück vorgefahren, dann mittels Luftfederung um ca. 5 bis 10 cm abgesenkt und dann ganz herausgefahren werden. Die erfindungsgemäße Stützbeinvorrichtung hält aufgrund des mit Hydrauliköl gefüllten Hubzylinders und der Absicherung über die Rückschlagventile 23, 23 den Sattelauflieger in der gewünschten Position.

Soll nun wiederum nach dem Aufsattelvorgang die Stützbeinvorrichtung eingefahren werden, erfolgt dies durch Betätigung des 5/2-Wege-Ventils 41 (siehe Fig. 3) von der Stellung "Stützbeine ausgefahren" in die Stellung "Stützbeine einfahren". Durch die Umschaltung des Ventils 41 wird die Druckluftzufuhr über die erste Druckluftzuleitung 21 in den Vorratstank 2 geschlossen und Druckluft über die zweite Druckluftzuleitung 42 zum Aktivieren der 2/2-Wege-Ventile 25 und dem Zuführen der Druckluft in den Hubzylinder 15 in die untere Kammer zum Einfahren der Stützbeine beaufschlagt. Die in die untere Kammer der Hubzylinder 15 einströmende Druckluft unter 8 bar Druck hebt das innere Rohr 13 an und drückt die im oberen Bereich des Hubzylinders 15 befindliche Hydraulikflüssigkeit über die Hydraulikrückleitung 24 zurück in den Vorratstank 2.

In bevorzugter Ausgestaltung weist die Stützbeinvorrichtung den Druckübersetzer 3 auf. Nunmehr wird fortfahrend an der Stelle, an der die Stützbeine mit maximal 400 kg Last auf den Untergrund auflasten, die Funktionsweise des Druckübersetzers 3 erläutert.

Mit dem Druckübersetzer 3 kann der Sattelauflieger auch im beladenen Zustand allein durch die Kraft der im Nebenverbrauchersystem vorliegenden Druckluft angehoben werden. Bei Erreichen der maximalen Hublast im direkten Drucklufthydraulikbetrieb wird dann über Betätigung des Wechselschalters/Ventils 35 der Druckübersetzer 3 aktiviert. Dabei wird zunächst auf einer Seite des Druckluftniederdruckkolbens 31 die Druckluft mit 8 bar über Druckluftanschlussleitung 34 zugeführt, so dass der große Druckluftniederdruckkolben 31 zur anderen Seite gedrängt wird, dabei mit dem einen Hydraulikhochdruckkolben 32 Hydrauliköl, beispielsweise mit einem Übersetzungsverhältnis von 1:20, also auf 160 bar komprimiert. Aufgrund des stromaufwärtig angeordneten Rückschlagventils 33 in der Hydraulikzuleitung 22 kann dieser Druck nur über die Hydraulikzuleitung 22 und Rückschlagventil 23 in den Hubzylinder 15 des zugeordneten Stützbeins fließen. Entsprechend wird dieses Stützbein um einen Hubbetrag, im dargestellten Ausführungsbeispiel 5 bis 6 mm angehoben.

Auf der anderen Seite des Druckübersetzers wird der Hydraulikhochdruckkolben 32 zurückgedrängt und saugt dabei Hydrauliköl aus dem Vorratstank 2 an. Bei Umschaltung des Wechselschalterventils 35 wird die andere Druckluftanschlussleitung 34 beaufschlagt, so dass der Druckluftniederdruckkolben 31 wieder zurückwandert und die Hydraulikhochdruckkolben 32 sich entsprechend bewegen, so dass nun das auf Hochdruck komprimierte Hydrauliköl in den Hubzylinder 15 des anderen Stützbeins 1' eingepresst wird, so dass auch hier ein Hub von 5 bis 6 mm erreicht wird.

Durch mehrmaliges Ausführen dieser wechselseitigen Kurzhübe ist dann ein ausreichendes Anheben der Stützbeinvorrichtung, auch bei einem voll beladenen Sattelauflieger möglich. Beispielsweise kann dann auch ein Absatteln ohne Betätigung der Luftfederung oder bei Fahrzeugen ohne Luftfederung problemlos erfolgen. Selbstverständlich ist ein erhöhter Druckluftverbrauch bei der Betätigung der Stützbeinvorrichtung mittels Druckübersetzer erforderlich, um die erforderlichen hohen Drücke zu erreichen. Bei einer Übersetzung von 1:20 kann somit jedes Stützbein 8 Tonnen Last heben.

Mit der erfindungsgemäßen Stützbeinvorrichtung und dem angegebenen Arbeitsverfahren ist es somit möglich, ein vollautomatisiertes Ausfahren und Einfahren der Stützbeinvorrichtung an einem Sattelauflieger zu ermöglichen, wobei als Antriebsmittel allein die am Fahrzeug vorhandene Druckluft des Nebenverbrauchersystems verwendet wird. Da die Anbauteile bisher üblichen Stützbeinvorrichtungen entsprechen, kann die erfindungsgemäße Stützbeinvorrichtung auch an vorhandenen Sattelaufliegern nachgerüstet werden. Je nach Kundenwunsch kann die Stützbeinvorrichtung in einfacher pneumatisch/hydraulischer Umsetzung arbeiten oder zusätzlich den Druckübersetzer zum aktiven Anheben auch beladener Sattelauflieger ausgebildet werden. Insbesondere in Verbindung mit einer automatischen Sattelkupplung, die die elektrischen und pneumatischen Verbindungen automatisch beim Kupplungsvorgang vornimmt, kann mit dieser Vorrichtung, die beispielsweise auch aus dem Führerhaus der Zugmaschine fernbetätigbar ausgebildet werden kann, vollständig auf ein Aussteigen des Fahrzeugführers verzichtet werden. Eine Gefährdung des Fahrzeugführers wird somit bei Auf- und Absattelvorgängen weitestgehend vermieden.

### Bezugszeichenliste

- 1, 1': Stützbein
- 11: Befestigungskopf
- 12: äußeres Rohr
- 13: inneres Rohr
- 14: Lastverteilungsfuß
- 15: Hubzylinder
- 16: Hydraulikanschluss
- 17: Druckluftanschluss

- 2: Vorratstank
- 21: erste Druckluftzuleitung
- 22: Hydraulikzuleitung
- 23: Rückschlagventil
- 24: Hydraulikrückleitung
- 25: 2/2-Wege-Ventil

- 3: Druckübersetzer
- 31: Druckluftniederdruckkolben
- 32: Hydraulikhochdruckkolben
- 33: Rückschlagventil
- 34: Druckluftanschlussleitung
- 35: Wechselschalter/Ventil

- 4: Nebenverbrauchersystem
- 41: 5/2-Wege-Ventil
- 42: zweite Druckluftzuleitung

## Patentansprüche

1. Verfahren zum Ein- und Ausfahren einer Stützbeinvorrichtung für Sattelauflieger mit einem Druckluft aufweisenden Nebenverbrauchersystem (4) und wenigstens einem mittels Hubzylinder (15) teleskopierbaren Stützbein (1,1'), mit den Schritten
a) für das Ausfahren des Stützbeins (1,1'):
- Beaufschlagen des Hubzylinders (15) mit Hydraulikflüssigkeit von einem Vorratstank (2) über eine Hydraulikleitung auf der einen Seite des Hubzylinders zum Ausfahren des Stützbeins, wobei zum Druckbeaufschlagen der Hydraulikflüssigkeit die Druckluft des Nebenverbrauchersystems (4) in den Vorratstank (2) geleitet wird;
- Absperren der Hydraulikflüssigkeitsleitung bei Erreichen der ausgefahrenen Stützstellung; und
b) für das Einfahren des Stützbeins (1,1'):
- Öffnen der Hydraulikleitung;
- Beaufschlagen des Hubzylinders (15) auf der anderen Seite des Hubzylinders mit der Druckluft zum Einfahren des Stützbeins (1,1'), wobei die Hydraulikflüssigkeit in den Vorratstank (2) zurückfließt,
**dadurch gekennzeichnet, dass** zum weiteren Anheben des Sattelaufliegers mit der Stützbeinvorrichtung die Hydraulikflüssigkeit von der Druckluft in einem pneumatisch/hydraulischen Druckübersetzer (3) unter erhöhten Druck gesetzt wird.

2. Verfahren nach Anspruch 1 bei einer Stützbeinvorrichtung mit zwei Stützbeinen (1,1'), **dadurch gekennzeichnet, dass** der Druckübersetzer (3) doppelseitig wirkt und abwechselnd bei einem Vorhub in das erste Stützbein (1) und beim Rückhub in das zweite Stützbein (1') die Hydraulikflüssigkeit unter erhöhtem Druck fördert.

3. Verfahren nach Anspruch 1 oder 2, **dadurch gekennzeichnet, dass** das Öffnen der Hydraulikleitung bei Beaufschlagen des Hubzylinders (15) auf der anderen Seite mit der Druckluft über ein pneumatisch aktivierbares Hydraulikventil (25) erfolgt.

4. Stützbeinvorrichtung für Sattelauflieger mit einem Druckluft aufweisenden Nebenverbrauchersystem (4) und wenigstens einem mittels Hubzylinder (15) teleskopierbaren Stützbein (1,1'), wobei ein Vorratstank (2) für Hydraulikflüssigkeit vorgesehen ist und zur Druckbeaufschlagung der Hydraulikflüssigkeit die Druckluft an den Vorratstank (2) über eine erste Druckluftzuleitung (21) angeschlossen ist, wobei eine Hydraulikzuleitung (22) vom Vorratstank (2) zur einen Seite des Hubzylinders (15) zum Ausfahren des Stützbeins (1,1') führt und eine zweite Druckluftzuleitung (42) zur anderen Seite des Hubzylinders (15) zum Einfahren des Stützbeins (1, 1') führt, **dadurch gekennzeichnet, dass** ein Druckübersetzer (3) mit Druckluftniederdruckkolben (31) und Hydraulikhochdruckkolben (32) vorgesehen ist, dessen Hydraulikhochdruckkolben (32) an die Hydraulikzuleitung (22) angeschlossen ist, wobei von diesem Anschluss stromaufwärtig und stromabwärtig je ein Rückschlagventil (33,23) zum Sperren eines Rückflusses der Hydraulikflüssigkeit in den Vorratstank (2) angeordnet sind.

5. Stützbeinvorrichtung nach Anspruch 4, **dadurch gekennzeichnet, dass** der Druckübersetzer (3) doppelseitig wirkend ausgebildet und ein Steuerventil (35) zur wechselseitigen Druckluftbeaufschlagung des Druckluftniederdruckkolbens (31) vorgesehen sind,

6. Stützbeinvorrichtung nach Anspruch 5, **dadurch gekennzeichnet, dass** zwei Stützbeine (1,1') vorgesehen sind, wobei jedem Stützbein (1,1') ein Rückschlagventil (23) und ein 2/2-Wege-Ventil (25) zugeordnet sind, und der Druckübersetzer (3) zwei
Hydraulikhochdruckkolben (32, 32) hat, wobei der erste Hochdruckkolben (32) an den Hubzylinder (15) des ersten Stützbeins (1) und der zweite Hochdruckkolben (32) an den Hubzylinder (15) des zweiten Stützbeins (1') angeschlossen sind.

7. Stützbeinvorrichtung nach Anspruch 4, 5 oder 6, **dadurch gekennzeichnet, dass** in der Hydraulikzuleitung (22) ein Rückschlagventil (23) zum Sperren eines Rückflusses der Hydraulikflüssigkeit in den Vorratstank (2) angeordnet und stromabwärtig vom Rückschlagventil (23) eine zum Vorratstank (2) zurückführende Hydraulikrückleitung (24) mit einem 2/2-Wege-Ventil (26) zum bedarfsweisen Einfahren des Stützbeins (1) angeschlossen sind.

## Claims

1. Method for retracting and extending a support leg device for semi-trailers, with a secondary consumer system (4) having compressed air and with at least one support leg (1,1') which can be telescoped by means of a lifting cylinder (15), having the steps
a) for the extending of the support leg (1,1'):
- supplying hydraulic fluid from a storage tank (2) to the lifting cylinder (15) via a hydraulic line on one side of the lifting cylinder in order to extend the support leg, the compressed air of the secondary consumer system (4) being conducted into the storage tank (2) in order to pressurise the hydraulic fluid;
- shutting off the hydraulic fluid line when the extended supporting position has been reached; and
b) for the retracting of the support leg (1,1'):
- opening the hydraulic line;
- supplying the compressed air to the lifting cylinder (15) on the other side of the lifting cylinder in order to retract the support leg (1,1'), the hydraulic fluid flowing back into the storage tank (2),
**characterised in that** for further lifting of the semitrailer with the support leg device, the hydraulic fluid is put under increased pressure by the compressed air in a pneumatic/hydraulic pressure intensifier (3).

2. Method according to Claim 1 in the case of a support leg device having two support legs (1,1'), **characterised in that** the pressure intensifier (3) acts bilaterally and conveys the hydraulic fluid under increased pressure alternately on a forward stroke into the first support leg (1) and on the return stroke into the second support leg (1').

3. Method according to Claim 1 or 2, **characterised in that** the opening of the hydraulic line when supplying the compressed air to the lifting cylinder (15) on the other side is effected via a pneumatically activatable hydraulic valve (25).

4. Support leg device for semi-trailers, with a secondary consumer system (4) having compressed air, and with at least one support leg (1,1') which can be telescoped by means of a lifting cylinder (15), a storage tank (2) for hydraulic fluid being provided and the compressed air being connected to the storage tank (2) via a first compressed air supply line (21) in order to pressurise the hydraulic fluid, a hydraulic supply line (22) running from the storage tank (2) to one side of the lifting cylinder (15) in order to extend the support leg (1,1') and a second compressed air supply line (42) running to the other side of the lifting cylinder (15) in order to retract the support leg (1,1'), **characterised in that** a pressure intensifier (3) is provided with a compressed air low-pressure piston (31) and a hydraulic high-pressure piston (32), the hydraulic high-pressure piston (32) of which is connected to the hydraulic supply line (22), there being arranged upstream and downstream of this connection a respective nonreturn valve (33,23) for blocking a backflow of the hydraulic fluid into the storage tank (2).

5. Support leg device according to Claim 4, **characterised in that** the pressure intensifier (3) is of bilaterally acting design and a control valve (35) is provided for alternate compressed air pressurisation of the compressed air low-pressure piston (31).

6. Support leg device according to Claim 5, **characterised in that** two support legs (1,1') are provided, a nonreturn valve (23) and a 2/2-way valve (25) being assigned to each support leg (1,1'), and the pressure intensifier (3) having two hydraulic high-pressure pistons (32, 32), the first high-pressure piston (32) being connected to the lifting cylinder (15) of the first support leg (1) and the second high-pressure piston (32) being connected to the lifting cylinder (15) of the second support leg (1').

7. Support leg device according to Claim 4, 5 or 6, **characterised in that** a nonreturn valve (23) for blocking a backflow of the hydraulic fluid into the storage tank (2) is arranged in the hydraulic supply line (22), and downstream of the nonreturn valve (23) a hydraulic return line (24) running back to the storage tank (2) is connected to a 2/2-way valve (25) for retracting the support leg (1) if required.

## Revendications

1. Procédé pour rentrer et sortir un dispositif de béquille pour une semi-remorque comprenant un système consommateur auxiliaire (4) présentant de l'air comprimé et au moins une béquille (1, 1') qui peut être entrée et sortie de façon télescopique au moyen d'un vérin hydraulique (15), comprenant les étapes :
a) pour sortir la béquille (1, 1') :
- alimentation du vérin hydraulique (15), d'un côté du vérin hydraulique, avec du fluide hydraulique provenant d'une cuve de réserve (2) par le biais d'une conduite hydraulique pour sortir la béquille, l'air comprimé du système consommateur auxiliaire (4) étant dirigé dans la cuve de réserve (2) pour mettre sous pression le fluide hydraulique ;
- fermeture de la conduite de fluide hydraulique lorsque la position d'appui sortie est atteinte ; et
b) pour rentrer la béquille (1, 1') :
- ouverture de la conduite hydraulique ;
- alimentation du vérin hydraulique (15), de l'autre côté du vérin hydraulique, avec l'air comprimé pour rentrer la béquille (1, 1'), le fluide hydraulique refluant vers la cuve de réserve (2),
**caractérisé en ce que** pour continuer à soulever la semi-remorque avec le dispositif de béquille, le fluide hydraulique est soumis par l'air comprimé à une pression plus importante dans un dispositif démultiplicateur de pression (3).

2. Procédé selon la revendication 1 dans un dispositif de béquille présentant deux béquilles (1, 1'), **caractérisé en ce que** le dispositif démultiplicateur de pression (3) agit des deux côtés et conduit à tour de rôle le fluide hydraulique sous pression élevée dans la première béquille (1) lors d'une course allée et dans la deuxième béquille (1') lors d'une course retour.

3. Procédé selon la revendication 1 ou 2, **caractérisé en ce que** lors de l'alimentation avec l'air comprimé du vérin hydraulique (15) sur l'autre côté, l'ouverture de la conduite hydraulique est réalisée via une valve hydraulique (25) pouvant être activée par voie pneumatique.

4. Dispositif de béquille pour semi-remorque avec un système consommateur auxiliaire (4) présentant de l'air comprimé et au moins une béquille (1, 1') qui peut être entrée et sortie de façon télescopique au moyen d'un vérin hydraulique (15), une cuve de réserve (2) pour le fluide hydraulique étant prévue, et pour mettre sous pression le fluide hydraulique, l'air comprimé est conduit à la cuve de réserve (2) via une première conduite d'alimentation en air comprimé (21), une conduite d'alimentation hydraulique (22) conduisant de la cuve de réserve (2) à un côté du vérin hydraulique (15) pour sortir la béquille (1, 1'), et une deuxième conduite d'alimentation d'air comprimé (42) conduisant à l'autre côté du vérin hydraulique (15) pour rentrer la béquille (1, 1'), **caractérisé en ce qu'**il est prévu un dispositif démultiplicateur de pression (3) avec un piston basse pression à air comprimé (31) et un piston haute pression hydraulique (32), dont le piston haute pression hydraulique (32) est raccordé à la conduite d'alimentation hydraulique (22), une valve antiretour (33, 23) étant disposée en amont et en aval de ce raccord pour bloquer un retour du fluide hydraulique dans la cuve de réserve (2).

5. Dispositif de béquille selon la revendication 4, **caractérisé en ce que** le dispositif démultiplicateur de pression (3) est conçu pour agir des deux côtés et une valve de contrôle (35) est prévue pour mettre sous pression alternativement d'un côté et de l'autre le piston basse pression à air comprimé (31).

6. Dispositif de béquille selon la revendication 5, **caractérisé en ce qu'**il est prévu deux béquilles (1, 1'), une valve antiretour (23) et une valve à 2/2 voies (25) étant associée à chaque béquille (1, 1'), et le dispositif démultiplicateur de pression (3) a deux pistons haute pression hydrauliques (32, 32), le premier piston haute pression (32) étant raccordé au vérin hydraulique (15) de la première béquille (1) et le deuxième piston haute pression (32) au vérin hydraulique (15) de la deuxième béquille (1').

7. Dispositif de béquille selon la revendication 4, 5 ou 6, **caractérisé en ce qu'**une valve antiretour (23) est placée dans la conduite d'alimentation hydraulique (22) pour bloquer un retour du fluide hydraulique dans la cuve de réserve (2), et une conduite de retour hydraulique (24) avec une valve à 2/2 voies (25) menant à la cuve de réserve est raccordée en aval de la valve antiretour (23) pour pouvoir rentrer la béquille (1) en cas de besoin.
